**Europäisches Patentamt**

**European Patent Office**

**Office européen des brevets**

(19)

(11) Veröffentlichungsnummer: **0 037 436**

**A1**

(12) # EUROPÄISCHE PATENTANMELDUNG

(21) Anmeldenummer: **80107977.3**

(22) Anmeldetag: **17.12.80**

(51) Int. Cl.³: **G 01 H 1/00**

(30) Priorität: **02.04.80 DE 3012773**

(43) Veröffentlichungstag der Anmeldung:
**14.10.81 Patentblatt 81/41**

(84) Benannte Vertragsstaaten:
**BE CH FR GB IT LI NL**

(71) Anmelder: **Roeder, Eckhard, Dipl.-Ing.**
**Lesumer Heerstrasse 5**
**D-2820 Bremen 77(DE)**

(72) Erfinder: **Roeder, Eckhard, Dipl.-Ing.**
**Lesumer Heerstrasse 5**
**D-2820 Bremen 77(DE)**

(74) Vertreter: **Bolte, Erich, Dipl.-Ing.**
**Hollerallee 73**
**D-2800 Bremen(DE)**

(54) **Verfahren zur Qualitätsprüfung von Verfahrensprozessen und Bauteilen.**

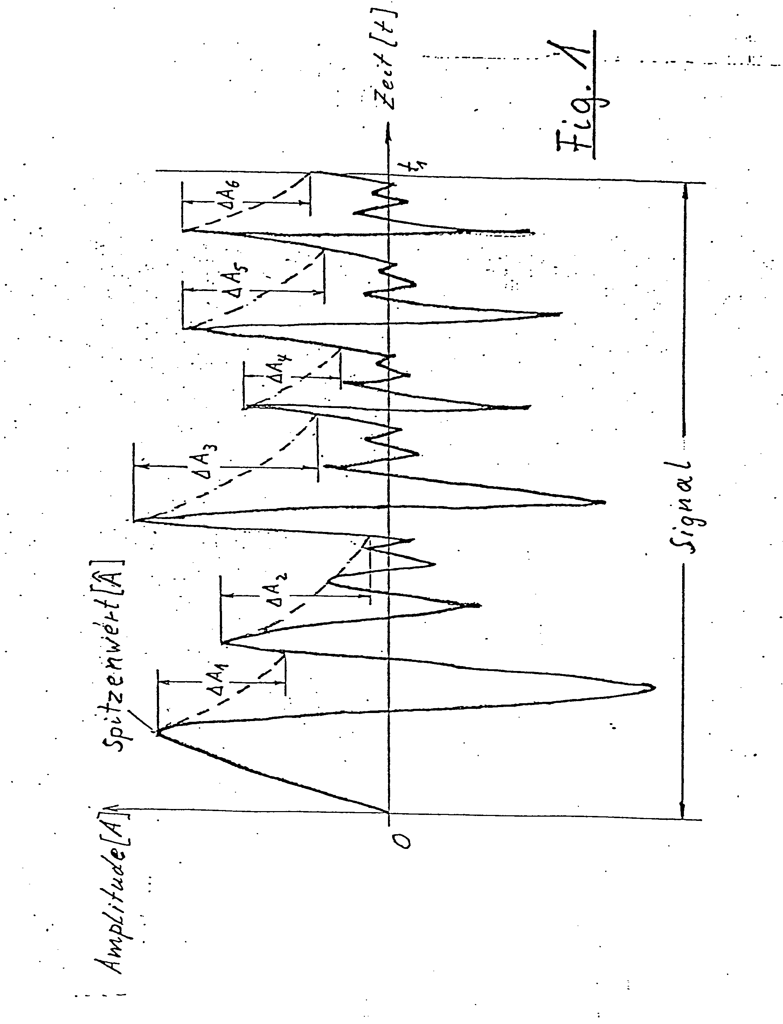

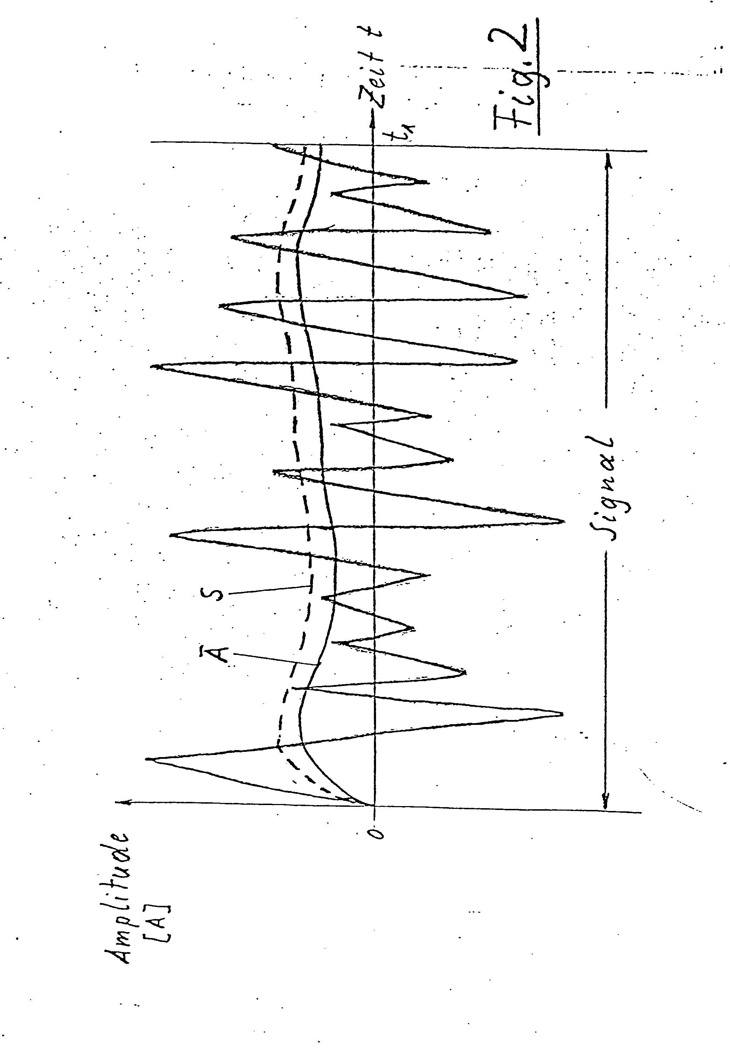

(57) Die Erfindung betrifft ein Verfahren zur Qualitätsprüfung von Verfahrensprozessen und Bauteilen durch Diagnose von ihren Schallschwingungen während einer vorgegebenen Zeit (Signal). Die Erfindung bezweckt, unabhängig von der subjektiven Bewertung einer Prüfperson eine objektive und sichere Auswertung der Schallschwingungen vorzunehmen, die auch sehr feine Veränderungen im Schwingungsverhalten frühzeitig erfassen kann. Zur diesem Zweck sieht die Erfindung zwei Lösungsmöglichkeiten vor. Zum einen schlägt die Erfindung vor, dass die Schwankungshöhe ($\Delta A_1 \ldots \Delta A_n$) der Amplituden des Signals in Abhängigkeit einer vorgewählten Entladezeit eines Integrators gemessen wird. (Fig. 1). Zum anderen schlägt die Erfindung vor, dass lediglich die Impulsdichte der Impulse des Signals gemessen wird, die eine vorgegebene Schwelle (S) überschreiten. (Fig. 2).

./...

EP 0 037 436 A1

Fig.2

## Verfahren zur Qualitätsprüfung von Verfahrensprozessen und Bauteilen

Die Erfindung betrifft ein Verfahren zur Qualitätsprüfung von Verfahrensprozessen und Bauteilen durch Diagnose von ihren Schallschwingungen während einer vorgegebenen Zeit (Signal).

Die Erfindung soll vornehmlich in der Qualitätssicherung sowie der Überwachung von Maschinen, Motoren, Anlagen und Fertigungsprozessen angewandt werden. Durch Bewegungsabläufe und die damit verbundene Reibung sowie Berührung von mechanischen Elementen bei technischen Vorgängen entstehen Geräusche und Körperschallschwingungen, die für den jeweiligen Prozess charakteristisch sind.

Jegliche Maschine und jeglicher technischer Prozess ändern ihr charakteristisches Schwingungsverhalten, sobald in ihnen Fehler auftreten. Zur Schadenfrüherkennung ist es daher wichtig, diese Veränderungen objektiv und richtig zu beurteilen.

Es ist bekannt, dass sich Fehler in Maschinen und Anlagen durch Beeinflussung des Geräusch- und Schwingungsverhaltens bemerkbar machen. Durch die Bewegungsabläufe in Maschinen breiten sich im Zusammenhang mit der Geometrie der jeweiligen Maschinenelemente sowie der einzelnen Bauteile einer Maschine charakteristische Körperschallschwingungen aus, die eine Information über den Bewegungsablauf liefern. Die Schwingungen werden durch die Berührung und Reibung der einzelnen Maschinenelemente bei dem Bewegungsablauf und dem damit verbundenen Feder/Masse-System hervorgerufen.

Wird die Reibung bzw. die Berührung nun durch Fehler wie Verunreinigungen, mechanische Beschädigungen, lose Teile, unterschiedliche Fertigungstoleranzen, Materialversagen u.s.w. verändert, so bedingt dies eine Änderung des akustischen Verhaltens.

Diese Vorgänge werden in vielen Bereichen der Technik durch subjektive Kontrollen vom Menschen berücksichtigt. Die Fehlerbeurteilung über den Luftschall ist jedoch nur unzureichend, so dass bislang zu zahlreichen Hilfsmitteln gegriffen wurde, wie z.B. Schraubenzieher oder Stethoskopen, um die Körperschallschwingungen mit zu erfassen. Die Fehler kündigen sich zum Teil durch Veränderung der Körperschallschwingungen an, die mit dem menschlichen Ohr nicht wahrnehmbar sind.

Die bekannten Untersuchungsmethoden zur Geräusch- und Schwingungsbeurteilung von Maschinen beschränkten sich bisher überwiegend auf eine Messung des Geräuschpegels sowie der charakteristischen Frequenzen eines Geräusches. Diese Geräusche werden im allgemeinen mit Mikrofonen als Luftschall aufgenommen. Die Luftschallmessungen unterliegen jedoch sehr stark den Störungen aus der Umwelt (Hintergrundgeräusch) und erfassen die Fehler in Maschinen nur dann, wenn sie Schwingungen erzeugen, die Frequenzen beinhalten, die von der Luft übertragen werden. Dadurch können nur sehr grobe Veränderungen in den Maschinen erfasst werden, während feine Unterschiede, die eine frühe Fehlerankündigung ermöglichen, nicht mehr aufgelöst werden. Die Geräuschpegelmessung ist ein sehr stark integrierendes Verfahren, bei dem die kurzzeitigen Schwankungen, wie sie in technischen Prozessen vorliegen, weitgehend unterdrückt werden.

Mit diesen Verfahren sind daher nur solche Fehler zu erfassen, die ständig und regelmässig auftreten und damit den Geräuschpegel anheben. Da die Geräuschveränderung durch Fehler in Maschinen je nach ihrer Ursache sehr unregelmässig sein kann, sind Frequenzanalysen zur Erkennung solcher unregelmässigen Vorgänge ebenfalls nicht geeignet, da sie im allgemeinen auf gleichmässige Geräuschvorgänge angewiesen sind, die charakteristische Frequenzen ausbilden. Darüber hinaus ist die Frequenzanalyse von Körperschallschwingungen nur dann möglich, wenn alle Bedingungen des Schwingungssystems, insbesondere der Ankopplung des Körperschallaufnehmers exakt konstant gehalten werden. Dies ist unter betrieblichen Bedingungen oft nur sehr schwer möglich.

Da der Zeitpunkt des Auftretens von Schäden in Maschinen nicht vorhergesagt werden kann, ist es in vielen Fällen erforderlich, Maschinen kontinuierlich zu überwachen, um eine rechtzeitige Fehlererkennung sicherzustellen. Es ist daher wünschenswert, den Verfahrensablauf der Geräusch- und Schwingungsdiagnose zu automatisieren und von subjektiven Einflüssen unabhängig zu machen. Bei Frequenzspektralanalysen, wie sie bisher vielfach durchgeführt werden, ist dies jedoch nicht möglich, da das Verfahren ein Spektrum liefert, das wiederum von Menschen ständig beobachtet und ausgewertet werden muss.

Der Erfindung liegt die Aufgabe zugrunde, unabhängig von der subjektiven Bewertung einer Prüfperson eine objektive und sichere Auswertung der Schallschwingungen vorzunehmen, die auch sehr feine Veränderungen im Schwingungsverhalten frühzeitig erfassen kann. Die Erfindung macht es sich zunutze, dass die Unregelmässigkeiten von Geräuschen zum einen in den Höhenschwankungen und zum anderen in zeitlichen Schwankungen (Rhythmus) auftreten.

Die Aufgabe wird erfindungsgemäss dadurch gelöst, dass die Schwankungshöhe der Amplituden des Signals in Abhängigkeit einer vorgewählten Entladezeit eines Integrators gemessen wird.

Die Aufgabe wird nach einem weiteren Vorschlag der Erfindung auch dadurch gelöst, dass lediglich die Impulsdichte der Impulse des Signals gemessen wird, die eine vorgegebene Schwelle überschreiten.

31. März 1980

Vorteilhaft ist es in diesem Zusammenhang ferner nach einem weiteren Vorschlag der Erfindung, dass die Höhe der Schwelle automatisch in Abhängigkeit von der mittleren Amplitude der Schwingungen des Signals gesteuert wird.

Zur Charakterisierung des Geräusch- bzw. Schwingungsverhaltens einer Maschine zu einem definierten Zeitpunkt lässt sich die Impulsdichte, die ein unmittelbares Mass für den Rhythmus des Geräusches darstellt, als Funktion der Amplituden des Geräusches in Form einer Impulsdichteverteilung erfassen.

Es ist deshalb nach einem weiteren Vorschlag der Erfindung vorteilhaft, das Verfahren in der Weise auszugestalten, dass die Impulsdichteverteilung als Geräusch- bzw. Schwingungs-Charakteristik in der Form gemessen wird, dass die Veränderung der Höhe der Schwelle, die die Impulse zur Messung überschreiten müssen, automatisch durch einen Rampengenerator kontinuierlich oder stufenförmig gesteuert wird und die jeweilige Höhe der Schwelle als x-Koordinate und die Impulsdichte der Schwingungen oberhalb der Schwelle als y-Koordinate in einem Koordinatensystem dargestellt wird.

Der entscheidende Vorteil des erfindungsgemässen Verfahrens besteht darin, dass die Unregelmässigkeiten und Schwankungen einer Schwingung, die charakteristisch für Fehlerursachen sind, objektiv und automatisch gemessen werden können.

Insbesondere bestehen Vorteile darin, dass

- eine direkte Zuordnung zwischen dem Schwingungsverhalten von Maschinen und ihrem Funktionszustand
  auf automatische Weise möglich ist

- die Werte von den subjektiven Einflüssen des Prüfpersonals unabhängig sind

- die Prüfung durch Entscheidungsschwellen vollautomatisiert in einen Produktionsablauf eingegliedert
  werden kann

- die Prüfbefunde von leichten Schwankungen im Messaufbau weitgehend unabhängig sind.

Die Erfindung kann in verschiedener Weise ausgeführt
werden. Zum leichteren Verständnis sind Zeichnungen
beigefügt, und zwar zeigt

Fig. 1 und 2 jeweils den zeitlichen Verlauf eines
                Signals, an dem die unterschiedlichen
                erfindungsgemässen Messmethoden dargestellt sind

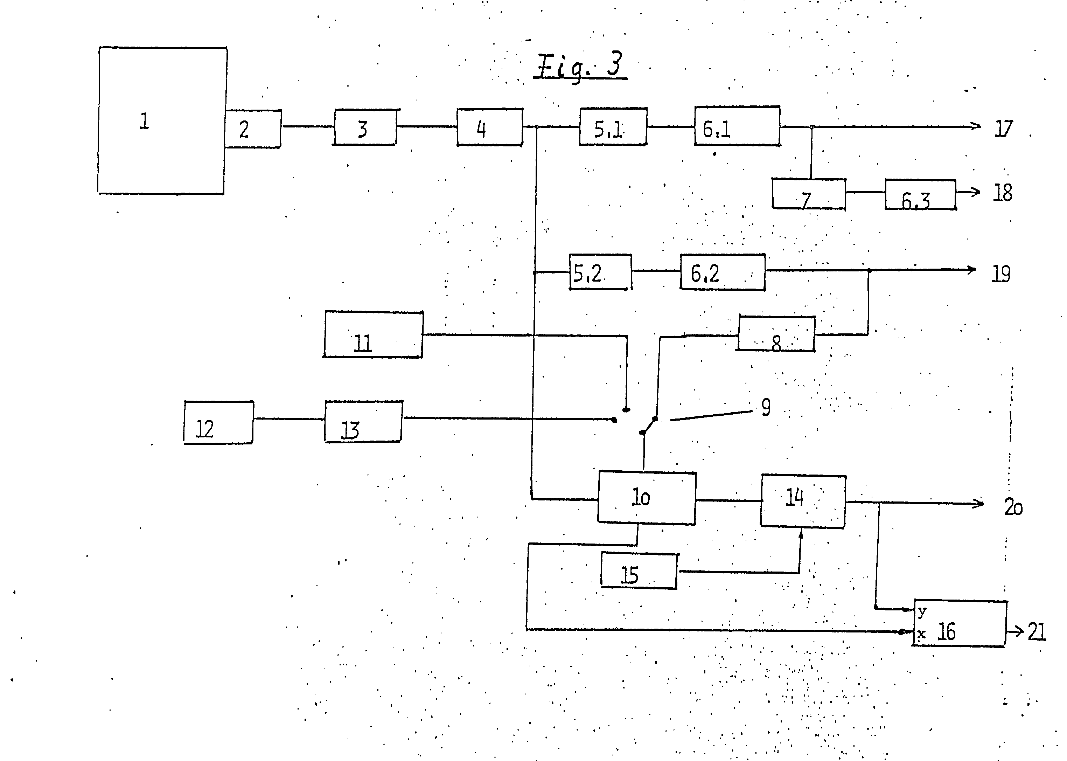

Fig. 3          ein Blockschaltbild einer Einrichtung zur
                Durchführung des erfindungsgemässen Verfahrens.

Die Bezugszeichen bedeuten:

1 - Geräuschquelle, z.B. Maschine
2 - Messwertaufnehmer
3 - Filter
4 - Verstärker

5.1  -  Gleichrichter mit Zeitkonstante "eins"

5.2  -  Gleichrichter mit Zeitkonstante "zwei"

6.1  -  Integrator mit Zeitkonstante "eins"

6.2  -  Integrator mit Zeitkonstante "zwei"

6.3  -  Integrator mit Zeitkonstante "drei"

7   -  Gleichspannungsentkoppler

8   -  Gleichspannungsverstärker

9   -  Umschalter

10  -  Diskriminator, Erzeuger der Schwelle S

11  -  Sollwertgeber manuell durchstimmbar

12  -  Rampengenerator

13  -  Sollwertgeber automatisch durchstimmbar

14  -  Zähler

15  -  Zeitgeber

16  -  Koordinatenschreiber

17  -  Spitzenwert $\hat{A}$

18  -  Schwankungshöhe $\Delta A_1 \ldots \Delta A_n$

19  -  mittlere Amplitude $\bar{A}$

20  -  Impulsdichte

21  -  Impulsdichteverteilung

Das Geräusch wird an der Geräuschquelle 1 z.B. einer Maschine mit dem Messwertaufnehmer 2 aufgenommen und in elektrische Signale umgesetzt. Von diesen Signalen werden im Filter 3 Frequenzbereiche ausgewählt und im Verstärker 4 verstärkt. Über den Gleichrichter 5.1 und den Integrator 6.1 werden mit der Zeitkonstante "eins" die Spitzenwerte 17 $\hat{A}$ der Signale ermittelt. Diese Spitzenwerte 17 werden über den Gleichspannungsentkoppler 7 wiederum einem Integrator 6.3 mit der Zeitkonstante "drei" zugeleitet, um unabhängig von der absoluten Höhe des Signales die Schwankungshöhe 18 $\Delta A$ zu erfassen.

Parallel dazu wird hinter dem Verstärker 4 das Signal einem zweiten Gleichrichter 5.2 und Integrator 6.2 mit der Zeitkonstante "zwei" zugeleitet und daraus die mittlere Amplitude 19 Ā gebildet. Dieser Mittelwert wird im Gleichspannungsverstärker 8 einstellbar verstärkt und über den Umschalter 9 dem Diskriminator 10 (Erzeuger der Schwelle S) zugeführt. Dem Diskriminator 10 werden gleichzeitig die hinter dem Verstärker 4 abgenommenen Signale zugeführt und im Zähler 14 nur die Impulsspitzen gezählt, die die Schwelle S im Diskriminator 10 überschreiten. Zur Bildung der Impulsdichte 20 wird der Zähler 14 durch einen Zeitgeber 15 gesteuert, der es gestattet, die Impulse in einer vorgegebenen Zeit zu erfassen. Über den Umschalter 9 kann die Steuerung der Schwelle S im Diskriminator 10 auch auf den manuell durchstimmbaren Sollwertgeber 11 und auf den automatisch durchstimmb-aren Sollwertgeber 13 umgeschaltet werden. Der automatisch durchstimmbare Sollwertgeber 13 wird von einem Rampengenerator 12 angesteuert, mit dem die Schwelle S im Diskriminator 10 automatisch von Null bis zum Maximalwert durchgestimmt werden kann, um auf diese Weise eine Impulsdichteverteilung 21 zu erhalten. Die Impulsdichteverteilung 21 kann dann als Geräuschmuster auf einem Koordinatenschreiber 16 dargestellt werden, in dem die Werte vom Zähler 14 auf die y-Koordinate und die Höhe der Schwelle S vom Diskriminator 10 auf die x-Koordinate gegeben werden.

Ermittelt man das Geräuschmuster nun nach verschiedenen Laufzeiten der Maschine, so können feinste Unterschiede in der Abweichung vom Geräusch vollautomatisch graphisch erfasst werden.

Ansprüche

1.) Verfahren zur Qualitätsprüfung von Verfahrensprozessen und Bauteilen durch Diagnose von ihren
Schallschwingungen während einer vorgegebenen Zeit
(Signal) $(t_1)$, dadurch gekennzeichnet, dass die
Schwankungshöhe $(\Delta A_1 \ldots \Delta A_n)$ der Amplituden des
Signals in Abhängigkeit einer vorgewählten Entladezeit eines Integrators gemessen wird. (Fig. 1).

2.) Verfahren zur Qualitätsprüfung von Verfahrensprozessen und Bauteilen durch Diagnose von ihren
Schallschwingungen während einer vorgegebenen Zeit
(Signal) $(t_1)$, insbesondere nach Anspruch 1, dadurch
gekennzeichnet, dass lediglich die Impulsdichte der
Impulse des Signals gemessen wird, die eine vorgegebene Schwelle (S) überschreiten. (Fig. 2).

3.) Verfahren nach Anspruch 2, dadurch gekennzeichnet,
dass die Höhe der Schwelle (S) automatisch in Abhängigkeit von der mittleren Amplitude $(\bar{A})$ der Schwingungen
des Signals gesteuert wird.

4.) Verfahren nach Anspruch 1 und 2, dadurch gekennzeichnet, dass die Impulsdichteverteilung als
Geräusch- bzw. Schwingungs-Charakteristik in der Form
gemessen wird, dass die Veränderung der Höhe der
Schwelle (S), die die Impulse zur Messung überschreiten
müssen, automatisch durch einen Rampengenerator kontinuierlich oder stufenförmig gesteuert wird und die
jeweilige Höhe der Schwelle (S) als x-Koordinate und
die Impulsdichte der Schwingungen oberhalb der Schwelle
(S) als y-Koordinate in einem Koordinatensystem dargestellt wird.

Fig. 1

Fig. 2

0037436

31. März 1980

0037436

31. März 1980

Fig. 3

**Europäisches Patentamt**

## EUROPÄISCHER RECHERCHENBERICHT

| KLASSIFIKATION DER ANMELDUNG (Int Cl.³) | | | |
|---|---|---|---|

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 600 680 (WESTINGHOUSE ELECTRIC CORP.)<br>* Seite 9, Absatz 2 - Seite 11, Absatz 1; Figur 2 *<br><br>-- | 1-3 |
| A | GB - A - 1 517 533 (THE NATIONAL RESEARCH DEVELOPMENT CORPORATION)<br>* Seite 1, Zeilen 38-76 *<br><br>-- | 1 |
| EP | EP - A - 0 018 853 (WESTINGHOUSE ELECTRIC CORP.)<br>* Seite 3, Zeile 13 - Seite 4, Zeile 12; Figuren 2-5 *<br><br>-- | 2,3 |
| A | FR - A - 2 386 088 (KRAFTWERK UNION AG)<br>* Seite 1, Zeile 26 - Seite 2, Zeile 1; Figuren *<br><br>-- | 2,3 |
| A | US - A - 4 111 035 (WEST et al.)<br>* Spalte 5, Zeile 15 - Spalte 6, Zeile 15; Figuren 2-5 *<br><br>-- | 2-4 |
| A | DE - A - 2 160 259 (ULRICH KNICK ELEKTRONISCHE MESSGERATE)<br>* Seite 3, Absatz 1; Figur 5 *<br><br>---- | 1 |

**KLASSIFIKATION DER ANMELDUNG (Int Cl.³)**

G 01 H 1/00

**RECHERCHIERTE SACHGEBIETE (Int. Cl.³)**

G 01 H   1/00
      3/00
      3/12
G 01 R  19/04

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| | | |
|---|---|---|
| Der vorliegende Recherchenbericht wurde für alle Patentansprüche erstellt. | | |
| **Recherchenort**<br>Den Haag | **Abschlußdatum der Recherche**<br>02-07-1981 | **Prüfer**<br>STUBNER |

EPA form 1503.1   06.78